# EUROPÄISCHE PATENTANMELDUNG

(11) **EP 2 397 417 A1**
(43) Veröffentlichungstag der Anmeldung: **21.12.2011**
(21) Anmeldenummer: 10166113.0
(22) Anmeldetag: 16.06.2010
(51) Int. Cl.: B65D 30/00, B32B 27/00

(54) **Folienbeutel mit einer Kunststofffolie als Beutelwand**

(71) Anmelder: Mondi AG, 1032 Wien (AT)
(72) Erfinder: Watterott, Oswald, D-53562, Sankt Katharinen (DE)
(74) Vertreter: Schneider, Michael

(57) **Zusammenfassung**

Folienbeutel, der als Beutelwand eine Kunststofffolie mit einer Außenlage und einer Innenlage aufweist, wobei die Kunststofffolie einen Vielschichtverbund zum Realisieren einer siegelfähigen Innenlage aufweist, wobei der Vielschichtverbund mehr als drei Schichten aufweist.

## Beschreibung

### TECHNISCHES FELD

Die Erfindung betrifft einen Folienbeutel, der als eine Beutelwand eine Kunststofffolie mit einer Außenlage und einer Innenlage aufweist.

Die Erfindung betrifft weiterhin eine Verwendung einer Kunststofffolie mit einer Außenlage und mit einer Innenlage zum Fertigen eines Folienbeutels.

Die Erfindung betrifft weiterhin ein Verfahren zum Herstellen eines Folienbeutels, der als Beutelwand eine Kunststofffolie mit einer Außenlage und einer Innenlage aufweist.

### HINTERGRUND

Ein Folienbeutel der eingangs im ersten Absatz angeführten Gattung ist der Anmelderin bekannt. Die Kunststofffolie weist in der Regel zwei Lagen auf, nämlich eine Außenlage und eine Innenlage.

Die Außenlage ist üblicherweise bedruckt und kann aus einem siegelfähigen oder nicht siegelfähigen Material bestehen, wie beispielsweise Polyester (PET), Polyethylen (PE) usw. oder vorzugsweise Polyamid (PA). Die Außenlage dient vorwiegend optischen Zwecken und weist oft eine Dicke von nur 10 µm bis 45 µm auf. Sie hat nur einen geringen Einfluss auf die mechanischen Eigenschaften des Folienbeutels.

Die hinreichend dicke Innenlage besteht aus einem siegelfähigen Material, wie beispielsweise PE. Die Dicke der Innenlage bewegt sich üblicherweise in einem Bereich von 100 µm bis 180 µm. Die Innenlage kann als eine Monoschicht (z.B. PE) ausgebildet sein. Sie kann jedoch auch als eine drei Materialschichten aufweisende Lage ausgebildet sein, die durch Koextrusion hergestellt wurde. Die Innenlage ist dann durch eine erste Materialschicht, eine zweite Materialschicht und eine dritte Materialschicht aufgebaut, wobei die dritte Materialschicht siegelfähig - z.B. durch PE realisiert - ist. Die Innenlage ist üblicherweise transparent oder weiß.

Die mechanischen Eigenschaften der Folie oder des Folienbeutels, also die Belastbarkeit, wie Durchstoßfestigkeit, Stabilität oder Steifigkeit wird üblicherweise durch die Dicke der Innenlage bestimmt bzw. beeinflusst.

Hinsichtlich der Belastung der Folie bzw. des Folienbeutels unterscheidet man üblicherweise zwei Gewichtsbereiche. In einem ersten Gewichtsbereich wird der Folienbeutel mit einem Füllgut belastet, das zwei bis vier Kilogramm wiegt. In diesem ersten Gewichtsbereich kommt als die Innenlage eine PE-Folie mit einer Dicke im Bereich von 100 µm bis 140 µm zum Einsatz. In einem zweiten Gewichtsbereich wird der Folienbeutel mit einem Füllgut belastet, das mehr als vier Kilogramm, insbesondere jedoch bis ca. fünf Kilogramm wiegt. In diesem zweiten Gewichtsbereich setzt man als die Innenlage eine PE-Folie mit einer Dicke im Bereich von ca. 180 µm ein.

Durch die Wahl der richtigen Foliendicke wird sichergestellt, dass die Kunststofffolie und letztendlich der aus der Kunststofffolie gefertigte Folienbeutel unter den jeweiligen Belastungen eine ausreichende Stabilität und Festigkeit aber auch Steifigkeit aufweist.

Bei dem bekannten Folienbeutel besteht daher die herstellungstechnische Systematik, dass für niedrigere Gewichtsbereiche eine dünnere PE-Folie bzw. eine die PE-Schicht aufweisende Schichtstruktur und für höhere Gewichtsbereiche eine dickere PE-Folie bzw. eine die PE-Schicht aufweisende Schichtstruktur als die Innenlage verwendet wird. Mit dieser Systematik sind einige Probleme im Herstellungsprozess verbunden. Die Verwendung von einer dicken Innenlage im Vergleich zu einer dünnen Innenlage wirkt sich nachteilig auf die Effizienz des Herstellungsprozesses aus. Im Vergleich zu der Verwendung einer dünnen Innenlage bedeutet die Verwendung einer dickeren Folie, dass z.B. bei dem zum Verschließen des Folienbeutels nötigen Versiegelungsprozess längerer Siegelzeiten und / oder höhere Temperaturen nötig sind. Somit sind längere Taktzeiten einzuhalten und / oder ein höherer Energieaufwand nötig. Auch die Entsorgung ist für dickere Folien teurer als für dünnere Folien.

Es ist daher eine Aufgabe der Erfindung, einen Folienbeutel bereitzustellen, so dass die vorstehend angeführten Probleme vermieden oder reduziert bzw. minimiert werden.

### ZUSAMMENFASSUNG DER ERFINDUNG

Diese Aufgabe wird zum einen durch einen Folienbeutel gemäß Anspruch 1 und zum anderen durch eine Verwendung gemäß Anspruch 6 und durch ein Verfahren gemäß Anspruch 8 gelöst.

Der Gegenstand der Erfindung ist daher ein Folienbeutel, der als Beutelwand eine Kunststofffolie mit einer Außenlage und einer Innenlage aufweist, wobei die Kunststofffolie einen Vielschichtverbund zum Realisieren einer siegelfähigen Innenlage aufweist, wobei der Vielschichtverbund mehr als drei Schichten aufweist.

Zudem ist der Gegenstand der Erfindung eine Verwendung einer Kunststofffolie mit einer Außenlage und mit einer Innenlage zum Fertigen eines erfindungsgemäßen Folienbeutels, wobei die Innenlage einen Vielschichtverbund zum Realisieren einer siegelfähigen Innenlage aufweist, wobei der Vielschichtverbund mehr als drei Schichten aufweist.

Zudem ist der Gegenstand der Erfindung ein Verfahren zum Herstellen eines Folienbeutels, der als Beutelwand eine Kunststofffolie mit einer Außenlage und einer Innenlage aufweist, und wobei die Kunststofffolie einen Vielschichtverbund zum Realisieren einer siegelfähigen Innenlage aufweist, wobei der Vielschichtverbund mehr als drei Schichten aufweist, wobei das Verfahren die nachfolgenden Verfahrensschritte aufweist, nämlich: - formen einer Schlauchstruktur aus der Kunststofffolie, und - versiegeln von einander gegenüberliegenden Abschnitten des Vielschichtverbunds.

Durch die erfindungsgemäßen Maßnahmen ist auf vorteilhafte Weise erreicht, dass selbst mit einer relativ geringen Schichtdicke des Vielschichtverbunds, wenn mit einer herkömmlichen Dicke einer herkömmlichen Innenlage verglichen, die gewünschte Festigkeit und Belastbarkeit und Steifigkeit der Kunststofffolie bzw. des damit gefertigten Folienbeutels erhalten ist.

Der Erfindung liegt die Erkenntnis zugrunde, dass die Verwendung eines Vielschichtverbunds mit mehr als drei Schichten als Ersatz für die herkömmliche siegelfähige Innenlage mit erheblichen Vorteilen verbunden ist. So lässt sich trotz reduzierter Dicke der Innenlage bedingt durch die besseren Materialeigenschaften des Vielschichtverbunds im Vergleich zu einer Monoschicht oder eine herkömmlichen dreischichtigen Schichtstruktur als Innenlage die geforderte Durchstoßfestigkeit bzw. Stabilität und auch die Steifigkeit erzielen. Unter Steifigkeit ist die Tendenz des fertigen Folienbeutels zu verstehen, nicht in sich zusammenzusacken.

Dies ist durch den Prozess der Herstellung des Vielschichtverbunds zu erklären, weil dabei die einzelnen Schichten in einen belastbareren Verbund übergehen. In Abkehr von der bekannten Lehre, dass eine höhere Belastbarkeit der Kunststofffolie nur durch erhöhte Gesamtdicke bzw. insbesondere durch erhöhte Dicke der Monoschicht bzw. der einzelnen Schichten in der dreischichtigen Schichtstruktur der Innenlage zu erreichen ist, liegt der Erfindung der Gedanke zugrunde, dass als die siegelfähige Innenlage ein Schichtensandwich bestehend aus miteinander verbundenen Einzelschichten zu verwenden ist, der mehr als drei Schichten aufweist. Damit wird die eingangs angeführte Systematik, nämlich höhere Belastbarkeit bzw. Steifigkeit fordert eine dickere Innenlage durchbrochen. Vielmehr ist die Systematik erhalten, dass zur Erzielung identischer bzw. vergleichbarer mechanischer Eigenschaften des Folienbeutels - wenn verglichen mit einer konventionellen Innenlage - die Anzahl der Schichten zu erhöhen ist, wobei gleichzeitig die Gesamtdicke des Vielschichtverbunds - wenn verglichen mit einer konventionellen Innenlage - reduziert ist.

Zusätzlich zu den verbesserten mechanischen Eigenschaften (höhere Belastbarkeit bzw. Steifigkeit) des Vielschichtverbunds, wenn verglichen mit einer konventionellen Innenlage mit identischer Dicke, ist jedoch auch noch eine signifikante Verbesserung im Bereich der Prozessführung bei der Herstellung des Folienbeutels erhalten. Da nun für identische Belastungsbereiche eine dünnere Innenlage zur Anwendung kommen kann, ist auch weniger Energie bzw. Wärme nötig, um eine Versiegelung zu erzeugen, die zum Verschließen des Beutels bzw. zum Erzeugen von Längssiegelnähten, wie z.B. am Rande der Seitenfalten, oder Quersiegelnähten (z.B: Kopf- und / oder Bodensiegelnähte) dient. So kann bei einer gegebenen Siegeltemperatur beispielsweise die Dauer des Siegelprozesses kürzer ausfallen, als dies bei einer herkömmlichen Innenlage vergleichbarer Belastbarkeit bzw. Steifigkeit und daher größerer Dicke der Fall sein müsste. Auch ist im Verhältnis zu einer herkömmlichen Innenlage mit vergleichbarer Belastbarkeit eine niedrigere Siegeltemperatur nötig, um die geforderte Güte der Siegelnähte zu erzielen. Summarisch betrachtet lässt sich also ein Folienbeutel mit kürzeren Taktzeiten und geringerem Energieaufwand herstellen, als dies der Fall wäre, wenn eine konventionelle Innenlage mit vergleichbarer Belastbarkeit bzw. Steifigkeit zur Anwendung kommen würde.

Die Außenlage besteht z.B. aus einer Folie aus Kunststoff, beispielsweise Polyester, wie orientiertes PET, amorphes PET, Polyolefine wie Polypropylen, Cast-PP, geblasenen, gereckte, biaxial gereckte PP-Folien, oder Polyethylen, Polystyrol, Polycarbonat, Zellglas, Polyamid, Polyvinylchlorid oder deren Copolymere. Es können auch coextrudierte oder laminierte Koststoffverbindungen oder Verbunde mit Papier verwendet werden. Ferner ist es möglich beschichtete Folien, biologisch abbaubare Folien, Aluminiumfolien und dergleichen zu verwenden. Die Außenlage kann bedruckt bzw. unbedruckt oder auch siegelfähig bzw. nicht siegelfähig sein. Ihre Dicke der Außenlage kann z.B. für Polyester im Bereich von 12 µm bis 24 µm, für Polypropylen im Bereich von 15 µm bis 40 µm oder für Polyethylen im Bereich von 22 µm bis 45 µm liegen. Die Außenlage hat einen beinahe vernachlässigbaren Einfluss auf die mechanischen Eigenschaften wie Belastbarkeit oder Steifigkeit des Folienbeutels.

Als siegelfähige Medien - als Schicht an jener dem Inneren des Folienbeutels zugewandten Seite der Innenlage - für die Innenlage können beispielsweise in dem Vielschichtverbund Kunststoffschichten aus Polyolefinen, wie Polyethylen, Polypropylen, oder EVOH, EVA, und / oder dessen Copolymeren oder Terpolymeren, Polystyrol, Polycarbonat, Zellglas, Polyamid oder Polyvinylchlorid zur Anwendung kommen.

Die Schichtstruktur der Innenlage kann identische Materialien aufweisen. Als besonders vorteilhaft ist es jedoch, wenn die Schichten in dem Vielschichtverbund durch unterschiedliche Materialien realisiert sind. Besonders vorteilhaft ist die Verwendung von zumindest einer Schicht aus Polyamid, weil dadurch die Durchstoßfestigkeit erhöht wird.

Die Innenlage und die Außenlage können durch Kaschieren (mittels Klebstoffauftrag) miteinander verbunden sein. Sie können auch durch Laminieren, also Verkleben durch Hitzeeinwirkung miteinander verbunden sein. Zum miteinander Verbinden der Außenlage und der Innenlage kann jedoch auch die Technik des Extrusionskaschierens verwendet werden, wobei mit Hilfe eines Extruders erhitzter und verflüssigter Kunststoff zwischen die Außenlage und die Innenlage eingebracht wird.

Weitere, besonders vorteilhafte Ausgestaltungen und Weiterbildungen der Erfindung ergeben sich aus den abhängigen Ansprüchen sowie der nachfolgenden Beschreibung. Dabei können die Verwendung und das Verfahren zur Herstellung den abhängigen Ansprüchen zum Folienbeutel oder umgekehrt weitergebildet sein. Vorteile, die im Zusammenhang mit dem Folienbeutel offenbart sind, liegen analog auch bei der Verwendung und dem Verfahren vor.

Um einen Vielschichtverbund zu realisieren können verschiedene Verfahren zur Anwendung kommen. Gemäß einem Aspekt der Erfindung ist der Vielschichtverbund durch Extrudieren oder Kaschieren bzw. Laminieren mehrerer Einzelschichten hergestellt. Als Methoden des Extrudierens können z.B. Blas-oder Co-Extrusion angewendet werden.

Als besonders vorteilhaft hat sich die Methode des Kaschierens mit Klebstoff herausgestellt, weil durch die Klebstoffschichten weitere verstärkende Zonen in den Vielschichtverbund eingebracht werden.

Jedoch auch das Blasextrudieren von Kunststoff zu einem Kunststofffilmschlauch und anschließendes Verblocken der Innenschicht des Kunststofffilmschlauchs kann zur Herstellung des Vielschichtverbunds genutzt werden. Demnach ist der Vielschichtverbund durch Blasextrusion von Kunststoff bzw. von Kunststoffgranulat und anschließendem Verblocken der Innenschicht des Kunststofffilmschlauchs hergestellt.

Bei dieser Variante wird zunächst in einem Extruder Granulat verflüssigt und eine Luftblase erzeugt, um die herum das verflüssigte Granulat in Schlauchform geblasen und der flüssige Kunststoff wieder verfestigt wird. Luftmenge/Granulatmenge und Abzugsgeschwindigkeit bestimmten die Dicke des Kunststoff-Filmschlauchs. Die Lagen der Wand des Kunststofffilmschlauchs werden durch mehrere Lagen von unterschiedlichem oder identischem Granulat erzeugt, wobei die Lagen bereits im flüssigen Zustand übereinander geschichtet werden, bevor der Kunststofffilmschlauch geblasen wird. Die Wand des Kunststofffilmschlauchs kann z.B. zwei, drei oder vier oder fünf Lagen aufweisen. In Anhängigkeit von dem eingesetzten Granulat erhält man schließlich Lagen des gleichen Typs oder Lagen unterschiedlichen Typs und kann so auch gezielt die Funktion bzw. die Eigenschaften der einzelnen Lagen bestimmen bzw. beeinflussen.

Nach Erzeugung des Kunststofffilmschlauchs erfolgt ein Zusammenpressen des Kunststofffilmschlauchs, sodass ebene Verbundlagen eines Kunststofffilms bzw. einer Kunststofffolie als besagter Vielschichtverbund entstehen, wobei die Verbundlagen eine erste Lagengruppe und eine zweite Lagengruppe aufweisen, welche Lagengruppen durch die Wand des Kunststofffilmschlauchs gebildet sind, wobei sowohl die erste Lagengruppe als auch die zweite Lagengruppe eine Lage des ersten Typs (z.B. Innenlage bzw. Innenschicht des Kunststofffilmschlauchs) und eine Lage des zweiten Typs (z.B. Außenlage bzw. Außenschicht oder andere Lagen bzw. Schichten zwischen der Außenlage und der Innenlage des Kunststofffilmschlauchs) aufweisen und die Lage des ersten Typs der ersten Lagengruppe mit der Lage des ersten Typs der zweiten Lagengruppe vollständig bzw. vollflächig verblockt wird. Es entsteht also eine Verbindung zwischen den Lagen des ersten Typs, die auf Adhäsion basiert. Die Festigkeit bzw. Belastbarkeit, wie Steifigkeit bzw. Durchstoßfestigkeit des Vielschichtverbunds lässt sich einerseits über die Materialrezeptur und andererseits über die Parameter Anti-Blocking-Additive, Reststemperatur und Druck beim aneinanderpressen der Lagengruppen steuern.

Insbesondere dann, wenn eine hohe Anzahl an Einzelschichten bzw. Einzelllagen in dem Vielschichtverbund gefordert bzw. gewünscht ist, also z.B. mehr als drei, insbesondere jedoch fünf bis zehn oder mehr Lagen bzw. Schichten, eignet sich der zuvor beschriebene Vorgang des Verblockens für die Herstellung des Vielschichtverbunds. Durch einen Kunststofffilmschlauch, dessen Wand zwei Lagen aufweist, wird daher ein Vielschichtverbund mit vier Schichten realisiert; wenn die Wand drei Lagen aufweist, wird eine Vielschichtverbund mit sechs Schichten realisiert; wenn die Wand vier Lagen aufweist, wird eine Vielschichtverbund mit acht Schichten realisiert; wenn die Wand fünf Lagen aufweist, wird ein Vielschichtverbund mit zehn Schichten realisiert; usw.

Wird beispielsweise als eine der Lagen des Kunststofffilmschlauchs Polyamid verwendet (das einen erheblichen Beitrag zur Steifigkeit und / oder Durchstoßfestigkeit liefert), so existiert diese Polyamidlage naturgemäß bereits zweimal in dem durch den Verblockungsprozess hergestellten Vielschichtverbund (der die Innenlage der Kunststofffolie für den Folienbeutel bildet) und wirkt sich dementsprechend günstig auf die geforderte Steifigkeit und / oder Durchstoßfestigkeit aus. Durch das Verblocken entsteht also eine vorteilhafte Verdopplung der funktionalen Schichten bzw. deren Eigenschaften oder Wirkungen in dem Vielschichtverbund.

Weitere Schichten des Vielschichtverbunds können z.B. verschiedene PEs oder Varianten davon aufweisen oder dadurch gebildet sein.

Die Außenlage des Kunststofffilmschlauchs kann vorzugsweise z.B. durch siegelfähiges Polyethylen realisiert sein, um die durch den Verblockungsprozess hergestellten siegelfähige Innenlage der Kunststofffolie zu erhalten.

Trotz einer relativ hohen Anzahl von Einzelschichten bzw. Einzellagen, z.B: zehn Einzellagen, liegt die Dicke des Vielschichtverbunds in einem Bereich von 50 µm bis 100 µm und fällt somit wesentlich geringer aus, als dies bei einer herkömmlichen Innenlage mit vergleichbaren mechanischen Eigenschaften der Fall wäre. So kann beispielsweise ein 50 µm dicker Vielschichtverbund eine ca. 100 - 120 µm dicke herkömmliche Innenlage, ein 80 µm dicker Vielschichtverbund eine ca. 100 µm bis 140 µm dicke herkömmliche Innenlage oder ein 100 µm dicker Vielschichtverbund eine ca. 180 µm dicke herkömmliche Innenlage ersetzen, wobei hinsichtlich der Stabilität und Festigkeit bzw. Steifigkeit des Vielschichtverbunds und letztendlich der Kunststoffolie bzw. des Folienbeutels keine Abstriche zu machen sind. Zugleich fällt die Energiebilanz beim Herstellen der Siegelnähte günstiger aus und die Taktzeiten sind verkürzt, weil zum Siegeln weniger Zeit benötigt wird, da auch weniger Material aufgeheizt werden muss. Auch der Entsorgungsbeitrag, der für die Entsorgung des Folienbeutels z.B. gemäß dem "grünen Punkt" zu entrichten ist, ist günstiger.

Die Erfindung wird im Folgenden anhand von einem Ausführungsbeispiel noch einmal näher erläutert, auf welches die Erfindung jedoch nicht beschränkt ist.

### BESCHREIBUNG EINES AUSFÜHRUNGSBEISPIELE

Bei einem Folienbeutel zum Aufnehmen eines Füllguts mit einem Gewicht von ca. einem bis fünf Kilogramm kommt eine Kunststofffolie als Beutelwand zum Einsatz bzw. zur Verwendung, die eine Außenlage und eine Innenlage für den Folienbeutel aufweist. Die Außenlage ist durch ein nicht siegelfähiges Material, im vorliegenden Fall PET realisiert. Die Innenlage ist durch einen Vielschichtverbund realisiert, der an seiner innersten Lage bzw. Schicht siegelfähige Eigenschaften aufweist.

Die Kunststofffolie wird durch Falten in eine schlauchartige Form gebracht und es werden in Längsrichtung des Folienbeutels sich einander gegenüberliegende Abschnitte der siegelfähigen Innenlage miteinander versiegelt, um den Schlauch zu formen. Je nach Spezifikation werden sodann z.B. weitere Längssiegelnähte zum Erzeugen bzw. zum Abgrenzen von Seitenfalten erzeugt. Der Folienbeutel wird auch durch Bildung von einer Quersiegelnaht entweder an seinem kopfseitigen Ende oder an seinem Ende im Fußbereich verschlossen. In diesem Zwischenproduktzustand kann der Folienbeutel durch das noch offene andere Ende hindurch befüllt werden. Danach wird auch dieses Ende des Beutels durch ein Erzeugen der entsprechenden Siegelnaht versiegelt.

Die Kunststofffolie, insbesondere der Vielschichtverbund, ist so dimensioniert, dass er eine herkömmliche Monoschicht-Innenlage ersetzt. Im vorliegenden Fall sind zehn relativ dünne Materialschichten durch einen Kaschierungsprozess zusammengefügt, die eine ca. 80 µm dicke Mehrschichtfolie als den Vielschichtverbund als siegelfähige Innenlage des Folienbeutels bilden. Dieser Vielschichtverbund ersetzt eine herkömmliche 100 µm bis 140 µm dicke PE-Folie als Innenlage für herkömmliche Kunststofffolien. Obwohl der Vielschichtverbund deutlich dünner ausfällt als die herkömmliche PE-Folie als Innenlage, hat er eine mindestens gleichwertige Durchstoßfestigkeit bzw. Stabilität. Zudem werden zur Längs- und Boden- und / oder Kopfnahtsiegelung weniger Temperatur und kürzere Siegelzeiten benötigt. Es liegt also im Vergleich zu herkömmlichen Lösungen eine Energieersparnis und ein kürzerer oder mehrere kürzere Prozessschritt(e) bei der Fertigung des Folienbeutels vor.

Zudem weist der Folienbeutel weniger Gewicht als eine herkömmliche Lösung mit vergleichbarer Stabilität bzw. Belastbarkeit oder Steifigkeit auf, so dass der Kunde weniger für den "grünen Punkt" bezahlen muss. "Der Grüne Punkt" ist eine international registrierte Marke und kann zur Kennzeichnung von z.B. Verpackungen lizenziert werden. Für solche Verpackungen wird ein Entsorgungsbeitrag eingehoben der vom Gewicht der Verpackung abhängig ist. Eine dünnere Innenlage reduziert das Gewicht und der Entsorgungsbeitrag ist somit auch günstiger.

Es wird abschließend noch einmal darauf hingewiesen, dass es sich bei dem vorhergehend detailliert beschriebenen Ausführungsbeispiel nur um eine von vielen Möglichkeiten zur Realisierung der Erfindung handelt. Das Ausführungsbeispiel kann von einem Fachmann in verschiedenster Weise modifiziert werden, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Folienbeutel, der als Beutelwand eine Kunststofffolie mit einer Außenlage und einer Innenlage aufweist, wobei die Kunststofffolie einen Vielschichtverbund zum Realisieren einer siegelfähigen Innenlage aufweist, wobei der Vielschichtverbund mehr als drei Schichten aufweist.

2. Folienbeutel nach Anspruch 1, wobei der Vielschichtverbund durch Extrudieren oder Kaschieren bzw. Laminieren mehrerer Einzelschichten hergestellt ist.

3. Folienbeutel nach einem der Ansprüche 1 oder 2, wobei der Vielschichtverbund durch einen Kunststofffilmschlauch hergestellt im Blasextrusionsverfahren und anschließendes Verblocken der Innenschicht des Kunststofffilmschlauchs hergestellt ist.

4. Folienbeutel nach einem der vorangehenden Ansprüche, wobei die Schichten in dem Vielschichtverbund durch unterschiedliche Materialien realisiert sind.

5. Folienbeutel nach einem der vorangehenden Ansprüche, wobei die Dicke des Vielschichtverbunds im Bereich von 50 µm bis 100 µm liegt.

6. Verwendung einer Kunststofffolie mit einer Außenlage und mit einer Innenlage zum Fertigen eines Folienbeutels gemäß einem der vorangehenden Ansprüche 1 bis 5, wobei die Innenlage einen Vielschichtverbund zum Realisieren einer siegelfähigen Innenlage aufweist, wobei der Vielschichtverbund mehr als drei Schichten aufweist.

7. Verwendung nach Anspruch 6, wobei der Vielschichtverbund durch einen Kunststofffilmschlauch hergestellt im Blasextrusionsverfahren und anschließendes Verblocken der Innenschicht des Kunststofffilmschlauchs hergestellt ist.

8. Verfahren zum Herstellen eines Folienbeutels, der als Beutelwand eine Kunststofffolie mit einer Außenlage und einer Innenlage aufweist, wobei die Kunststofffolie einen Vielschichtverbund zum Realisieren einer siegelfähigen Innenlage aufweist, wobei der Vielschichtverbund mehr als drei Schichten aufweist, wobei das Verfahren die nachfolgenden Verfahrensschritte aufweist, nämlich:
a) formen einer Schlauchstruktur aus der Kunststofffolie, und
b) versiegeln von einander gegenüberliegenden Abschnitten des Vielschichtverbunds.

9. Verfahren nach Anspruch 8, wobei zeitlich vorgelagert zu den Schritten a) und b) der Vielschichtverbund hergestellt wird, wobei ein Kunststofffilmschlauch im Blasextrusionsverfahren hergestellt wird und anschließend die Innenschicht des Kunststofffilmschlauch verblockt wird.
